# EUROPEAN PATENT APPLICATION

(11) **EP 2 654 008 A1**
(43) Date of publication of application: **23.10.2013**
(21) Application number: 13163797.7
(22) Date of filing: 15.04.2013
(51) Int. Cl.: G06Q 30/02

(54) **Email inbox measurement system and method**

(30) Priority: 19.04.2012 US 201261635450 P; 29.06.2012 US 201213538518
(71) Applicant: Return Path Holdings, INC., New York, New York 10010 (US)
(72) Inventor: Gould, Gregory M., Denver, CO Colorado 80212 (US); Fortna, Andrew D., Longmont, CO Colorado 80503 (US); Kochis, Kyle D., Denver, CO Colorado 80220 (US); Bilbrey, George M., Lafayette, CO Colorado 80026 (US)
(74) Representative: P&TS SA (AG, Ltd.)

(57) **Abstract**

A system and method for evaluating the effectiveness of an email campaign is described. The system and method may include the receipt of campaign data, the combination of the campaign data, and the determination of a campaign score and ranking based on the combined data. The determination of the campaign score and ranking may incorporate the use of a statistical model for testing similarity. The system and method may provide an indication of email message recipients' level of engagement with a particular campaign, as well as an indication of the effectiveness of a particular campaign as compared to that of other campaigns.

## Description

### CROSS REFERENCE TO RELATED APPLICATIONS

The present application is related to and claims the benefit of U.S. Provisional Patent Application No. 61/635,450, filed April 19, 2012, the entirety of which is incorporated herein by reference.

### BACKGROUND OF THE INVENTION

### Field of the Invention

The present invention relates to a system and method for electronic mailbox measurement. In particular, the invention relates to a system and method for determining and analyzing message recipients' level of engagement with an email campaign, and evaluating the performance or effectiveness of the email campaign.

### Description of the Related Art

Email campaigns are widely used by established companies with legitimate purposes and responsible email practices to advertise, market, promote, or provide existing customers with information related to one or more products, services, events, etc. Such email campaigns may be used for commercial or non-commercial purposes. They can be targeted to a specific set of recipients, and to a particular goal, such as increasing sales volume or increasing donations.

It is a desire of email campaign managers, and others who initiate email campaigns, for sent messages to be ultimately delivered to the intended message recipients. U.S. Pat. App. No. 13/449,153, which is incorporated herein by reference in its entirety, describes a system and method for monitoring the deliverability of email messages (i.e., whether or not sent messages are ultimately delivered to intended message recipients).

It is a further desire of campaign managers to design campaigns that incite a maximum level of engagement by recipients of the email messages associated with each campaign. For example, campaign managers endeavor to increase the amount of campaign related messages that are read by recipients, the amount of messages that are forwarded by recipients, the amount of links within messages that are followed by recipients, and the amount of recipients that prioritize messages associated with various campaigns. To maximize engagement, campaign managers rely on practices such as carefully composing the subjects and contents of campaign-related messages, carefully selecting the time at which messages are sent, choosing the frequency at which messages are sent, and targeting campaigns to select groups of recipients.

To assist campaign managers in maximizing the effectiveness of email campaigns, there exists a need to provide campaign managers with a system and method to evaluate the effectiveness of campaigns, based on the recipients' level of engagement with each campaign. In particular, there exists a need to provide campaign managers with a system and method to compare the performances of multiple email campaigns with one another, so that the campaign managers may tailor the practices they use to increase recipient engagement with a particular campaign, based on that campaign's performance relative to other campaigns.

### SUMMARY OF THE INVENTION

Accordingly, it is an object of the invention to provide a system and method for collecting data related to recipients' level of engagement with email campaigns.

It is another object of the invention to provide a system and method for organizing campaign data received from multiple sources such that all data related to a particular campaign can be combined.

It is another object of the invention to provide a system and method for calculating a campaign score for an email campaign based upon recipients' level of engagement with the campaign.

It is another object of the invention to provide a system and method for determining a campaign ranking for an email campaign based upon recipients' level of engagement with the campaign as compared to recipients' level of engagement with other email messages.

It is another object of the invention to provide a system and method for determining a benchmark for an email campaign, the benchmark providing an end user with a meaningful understanding of a campaign's performance relative to that of other campaigns.

Those and other objects of the invention are accomplished, as fully described herein, by a method comprising the steps of: receiving a plurality of campaign reports, each campaign report including campaign data associated with an email campaign; combining the campaign data from the multiple reports to produce a single report corresponding to the email campaign; calculating a campaign score for the email campaign based on the combined campaign data; and determining a campaign ranking for the email campaign based on the campaign score.

Those and other objects of the invention are also accomplished, as fully described herein, by a system comprising: a secure server for receiving campaign data; an analytics cluster for analyzing campaign data; a database server for storing campaign data; and a web server for presenting campaign data to an end user.

### BRIEF DESCRIPTION OF THE DRAWINGS

FIG. 1 is an illustration showing an overview of a system in accordance with an exemplary embodiment of the invention;

FIG. 2 is a flow diagram showing steps in a process in accordance with an exemplary embodiment of the invention;

FIG. 3 is a histogram showing a breakout of engagement scores in accordance with an exemplary embodiment of the invention;

FIG. 4 is an illustration showing campaign data from multiple sources in accordance with an exemplary embodiment of the invention;

FIG. 5 is a flow diagram showing steps in a process, and exemplary data, in accordance with an exemplary embodiment of the invention;

FIG. 6 is a graphic display of a user interface in accordance with an exemplary embodiment of the invention

FIG. 7 is a graphic display of a user interface in accordance with an exemplary embodiment of the invention; and

FIG. 8 is a graphic display of a user interface in accordance with an exemplary embodiment of the invention.

### DETAILED DESCRIPTION OF THE PREFERRED EMBODIMENTS

*1. System Overview*

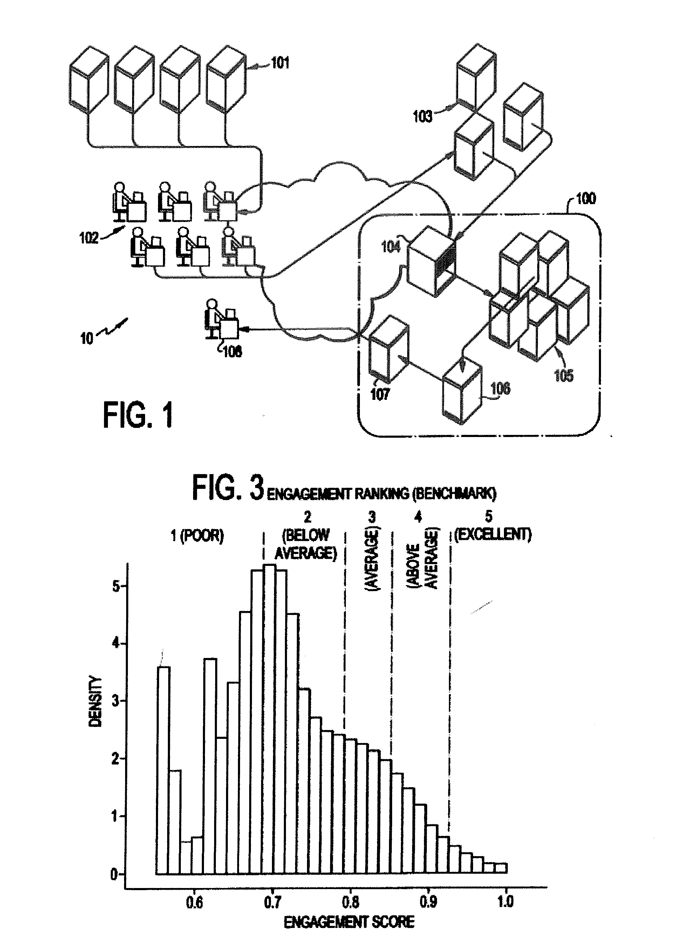

Turning to the drawings, FIG. 1 depicts a general overview of a system 10 in which the invention may operate. The overall system 10 may include sending servers 101, client computers 102, data collectors 103, a FTP server 104, an analytics cluster 105, a database server 106, a web server 107, and a campaign manager 108.

Each of the components of the system 10 (including the sending servers 101, client computers 102, data collectors 103, FTP server 104, analytics cluster 105, database server 106, web server 107, and devices used by the campaign manager 108) may be implemented by a computer or computing device having one or more processors to perform various functions and operations in accordance with the invention. The computer or computing device may be, for example, a mobile device, personal computer (PC), server, or mainframe computer. In addition to the processor, the computer hardware may include one or more of a wide variety of components or subsystems including, for example, a co-processor, input devices, monitors, and a memory or storage device such as a database. All or parts of the system 10 and processes can be implemented at the processor by software or other machine executable instructions which may be stored on or read from computer-readable media for performing the processes described. Unless indicated otherwise, the process is preferably implemented automatically by the processor in real time without delay. Computer readable media may include, for example, hard disks, floppy disks, memory sticks, DVDs, CDs, downloadable files, read-only memory (ROM), or random-access memory (RAM).

As illustrated in FIG. 1, the FTP server 104, analytics cluster 105, database server 106, and web server 107 may form a centralized measurement center 100 in accordance with the invention. The measurement center 100 may be remotely located from, but in communication with, the data collectors 103 and/or the campaign manager 108 through a network, such as the Internet, or in direct wired or wireless communication with the data collectors 103 and/or the campaign manager 108. The measurement center 100 may communicate with multiple, independent data collectors 103 to obtain data, and combine the data to create one singular view of the data.

Although in FIG. 1 the elements 101-108 are shown as separate components, two or more of those elements may be combined together. For example, the measurement center 100 may be one integrated system of components 104-107, and may also include one or more data collectors 103. The arrows in FIG. 1 depict a preferred direction of data flow within the system 10.

*2*. *Process Overview*

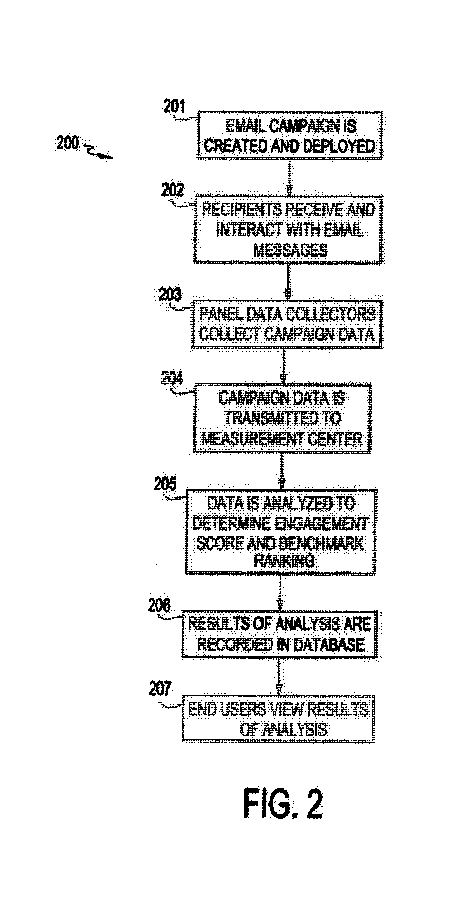

An exemplary non-limiting illustrative embodiment of the system 10 operates in accordance with the flow diagram 200 shown in FIG. 2.

First, at step 201, an email campaign is created and deployed by any number of commercial mailers via an in-house email deployment system, or a third party Email Service Provider (ESP). The email campaign includes one or more email messages, each of which can be sent to a large number of recipients. Accordingly, each email message may be referred to as a "bulk email message." The email message may include a subject line directed to encouraging recipient engagement with the message, and a body directed to soliciting business from the recipient. The email message may further include a campaign ID header to uniquely identify the email campaign with which the email message is associated. The campaign ID header may or may not be viewable by the individual recipients of the email message. The email message may be sent via a sending server 101 at one time, or in batches, as shown in FIG. 1.

At step 202, recipient mail clients receive the email message associated with the email campaign. If the message successfully reaches a recipient, the recipient may view the message on a client computer 102 via, for example, a webmail, desktop, or mobile email client. The set of all recipients includes a subset of panel recipients, wherein the usage activity of the panel recipients is considered representative of the usage activity of all recipients. Each panel recipient's mail client is equipped with one of several third party add-ons to the email client. Such add-ons allow for anonymous recording of the recipient's usage activity regarding mailbox placement and interaction with messages. Recipients interact with the received campaign email messages as they normally would. Such interactions may include, for example, opening messages, reading messages, deleting messages either before or after reading them, adding the sender of a message to the recipient's personal address book, forwarding messages, and clicking on links within messages.

At step 203, the data collectors 103, which may be operated by the providers of the third party add-ons, collect metrics associated with the recipient interactions. The collection of such metrics may be facilitated by the add-ons, which record recipient usage activity at the client computers 102 and transmit the recorded information to the data collectors 103 via the network. Preferably, each data collector 103 is an independent entity. Each data collector 103 aggregates the collected metrics by campaign to produce a campaign report, which includes campaign data, for each specific campaign. Campaign data may include message receive date, message receive time, subject line, sender domain name, sender user name, originating IP addresses, campaign ID header, and all of the associated mailbox placement and interaction metrics. The campaign reports produced by the data collectors may take on any appropriate format, provided the campaign reports are capable of being read by the measurement center 100. For example, the campaign reports may be tab delimited files, multiple SQL dump files, XML files, etc. When multiple data collectors 103 produce campaign reports having differing formats, the measurement center 100 may employ panel data and campaign rollup logic, which is discussed in Section 3 below.

At step 204, each of the data collectors 103 transmits one or more individual campaign reports to a secure server 104 via sFTP or some other similar secure protocol.

At step 205, the individual campaign reports are transferred from the secure server 104 to an analytics cluster 105 where the following process occurs. Utilizing the unique combination of campaign data (e.g., message receive date, message receive time, subject line, sender domain name, sender user name, originating IP addresses, and campaign ID (which is included in the campaign ID header)) from each of the multiple individual campaign reports received from the data collectors 103, the analytics cluster 105 identifies which campaign data from each campaign report pertains to each of one or more campaigns. For example, the analytics cluster 105 may determine that certain campaign data received from different data collectors 103 pertains to the same campaign, because the campaign data is associated with the same campaign ID. Thus, one report can contain data attributed to one or more campaigns, and data for one campaign may be obtained from one or more reports.

The analytics cluster 105 aggregates the like interaction metrics from each of the individual campaign reports for each of the campaigns. For example in a system 10 with two data collectors 103, a first data collector 103 may report that twenty recipients read an email message having a particular campaign ID, and a second data collector 103 may report that ten recipients read an email message having the same campaign ID. Thus, the analytics cluster 105 would aggregate the interaction metrics from the individual reports to determine that a total of thirty recipients read the email message. Data from each of the campaigns is included in a single report generated by the analytics cluster 105, the single report providing campaign performance statistics for all of the email campaigns having messages received by the recipients reporting to the data collectors 103.

A benchmarking process is run utilizing a statistical model for testing similarity that generates an engagement score based on recipients' engagement with each of the campaigns observed by the data collectors 103. In an exemplary embodiment of the invention, the model assigns weighted rankings to the following variables to benchmark engagement: amount of messages placed in inbox, amount of messages placed in spam folder by ISP, amount of messages placed in spam folder by recipient, amount of messages rescued from spam folder by recipient, amount of messages placed in a priority inbox or similar folders for ISPs that have them (e.g., Gmail priority inbox), amount of messages for which the sender is added to a personal address book, amount of messages opened, amount of messages read, amount of messages deleted without being read, amount of messages forwarded, amount of messages replied to, and the amount of messages for which recipients do not interact with the message at all. The analytics cluster 105 uses the weighted ranking of each of the interaction metrics for each individual campaign to generate an engagement score for the campaign. Some interaction metrics, such as the amount of messages read, may be weighted more heavily than other interaction metrics. Furthermore, the relative weights of the interaction metrics may be modified, as appropriate, in accordance with the invention. Preferably, all interaction metrics reported by the data collectors 103 are considered by the analytics cluster 105. In addition, the interaction metrics that may be considered are not limited to the exemplary interaction metrics discussed herein.

An exemplary embodiment of the invention determines and assigns an engagement score and an engagement ranking to each individual campaign. The engagement score provides an indication of the recipients' engagement with the campaign. The engagement ranking provides an indication of the recipients' engagement with the particular campaign as compared to the recipients' overall engagement with all campaign email messages received. The engagement score may be, for example, a numerical value between 0 and 1, and the engagement ranking may be an integer value from 1 to 5. Each campaign is assigned an engagement benchmark based on the engagement ranking. For example, a campaign with an engagement ranking of 1 may be assigned an engagement benchmark of "poor," and a campaign with an engagement ranking of 5 may be assigned an engagement benchmark of "excellent."

FIG. 3 includes an example of a histogram 300 showing a breakout of engagement scores based on a statistical model for testing similarity. In the example shown in FIG. 3, the horizontal axis represents the engagement score, and the vertical axis represents a relative number of campaigns observed by the data collectors 103 that received a particular engagement score. An exemplary breakout of engagement scores is as follows: the bottom 60% is rated as "poor," the next 10% is "below average," the next 10% is "average," the next 10% is "above average," and the top 10% is "excellent." However, other various breakouts of engagement scores may be used in accordance with the invention as appropriate. Accordingly, the present invention provides a means for evaluating the performance or effectiveness of each campaign as compared to other campaigns.

The histogram 300, the engagement score, and the engagement ranking need not be presented to the campaign manager 108. Rather, the campaign manager 108 may be provided with the engagement benchmark for that campaign manager's particular campaign. Furthermore, the number of unique engagement rankings (five in the illustrated example), and their associated engagement benchmarks ("poor" to "excellent" in the illustrated example) may be modified such that the engagement rankings and associated engagement benchmarks provide a meaningful indication of a campaign's performance relative to that of other campaigns. For example, an engagement benchmark of "average" for a campaign need not necessarily indicate that the engagement score for that campaign corresponds to a mathematical average of all engagement scores. The engagement benchmark algorithm is discussed in greater detail in Section 4 below.

Preferably, at step 206, results of the benchmarking process are recorded in the database server 106, and saved for historical reference.

At step 207, campaign managers 108, which include all potential end users of the system 10, may log in to a web based interface to view results, including individual engagement metrics and engagement benchmarks for each campaign. The results may be compared to results associated with other messages, including results from other campaigns originated by the campaign manager, or campaigns originated by competitors. The results may also be assigned to categories to provide a campaign manager 108 with a focused comparison of email campaigns associated with one or more particular categories. The category assignment may be performed by the measurement center 100, the campaign manager 108, or both. Categories may include sender/business type categories such as shopping, social networking, and entertainment, and message type categories such as promotional, transactional, deals, offers, etc.

In an exemplary embodiment of the invention, the measurement center 100 may provide the campaign manager 108 with one or more customizable reports, which may allow the campaign manager 108 manager to select, for comparison, one or more (or all) campaigns of a certain competitor, or campaigns from multiple different competitors. The customizable reports may also allow the campaign manager to compare all metrics (e.g., time of message, frequency of messages, etc.) or selected ones. A more detailed description of information that may be provided to the campaign manager 108 is discussed in Section 5 below.

Many benefits are obtained by comparing the performances of different campaigns. For example, such comparison allows a campaign manager 108 to improve a campaign based on the comparison. The invention allows a campaign manager 108 to view the messages a competitor sends, and further allows the campaign manager 108 to understand how the performance of that campaign manager's campaign compares to a competitor's campaign. Therefore, based on information provided by the invention, a campaign manager 108 can change campaign or email program practices to develop more competitive practices. For example, the present invention permits a campaign manager 108 to view subject lines that are sent, the contents of email messages, the time and date that messages are sent, whether a campaign is targeted (i.e., having messages that are sent only to recipients exhibiting one or more select attributes) or sent to a whole list, and how frequently messages are sent.

The invention provides campaign managers 108 with interaction metrics and an overall engagement benchmark for each campaign. In an exemplary embodiment, the invention may allow a campaign manager to view engagement benchmarks, and interaction metrics for multiple campaigns simultaneously. Thus, if a campaign manager 108 using the present invention sees that a competitor's campaign is handling messages in a way that differs from the campaign manager's campaign (e.g., using specific subject line keywords, sending messages more frequently, performing targeted sends), and the competitor's campaign performance is distinctly better than that of the campaign manager 108 in one or more respects, the campaign manager 108 can leverage specific practices (e.g., subject line, message content) or change overall mail program strategy (e.g., email program themes, frequency, segmentation) to improve its campaign performance.

The measurement center 100 includes the following features implemented in accordance with steps 204-207 above.

*3. Panel Data & Campaign Rollup Logic*

The panel data and campaign rollup logic, which may be implemented at the measurement center 100, takes raw email campaign data from a number of different data collectors 103 and determines the campaign statistics noted above. Each data collector 103 may provide the campaign data to the measurement center 100 in different formats. For example, one data collector 103 may provide data A, B, and C (e.g., receive date, subject line, and sender name) and another data collector 103 may provide data A, C, and D (e.g., receive date, subject line, and originating IP address), etc. Or, one data collector 103 may provide data A in format 1 (e.g., tab delimited file), and another data collector 103 may provide data A in format 2 (e.g., SQL dump file). The logic accommodates for differences in data formats, and formats campaign data from different data collectors 103 such that the campaign data may be used to obtain meaningful results.

Data from a "subscriber panel" is an underlying component of the invention. The measurement center 100 may communicate with multiple data collectors 103, which collect data from multiple groups of recipients, those recipients collectively constituting a single subscriber panel, so that the data collectors 103 may report email campaign deliverability and engagement statistics. By identifying common characteristics across the data sets including receive date, subject lines, originating IP address(es), sender user name, sender domain name, and a unique campaign identifier provided in the SMTP header of each message, the invention allows for the reporting of metrics and generation of an engagement benchmark for a singular campaign, the campaign data of which may have started as multiple (unbounded) rows of campaign data across the multiple data collectors 103 which receive data from the subscriber panel.

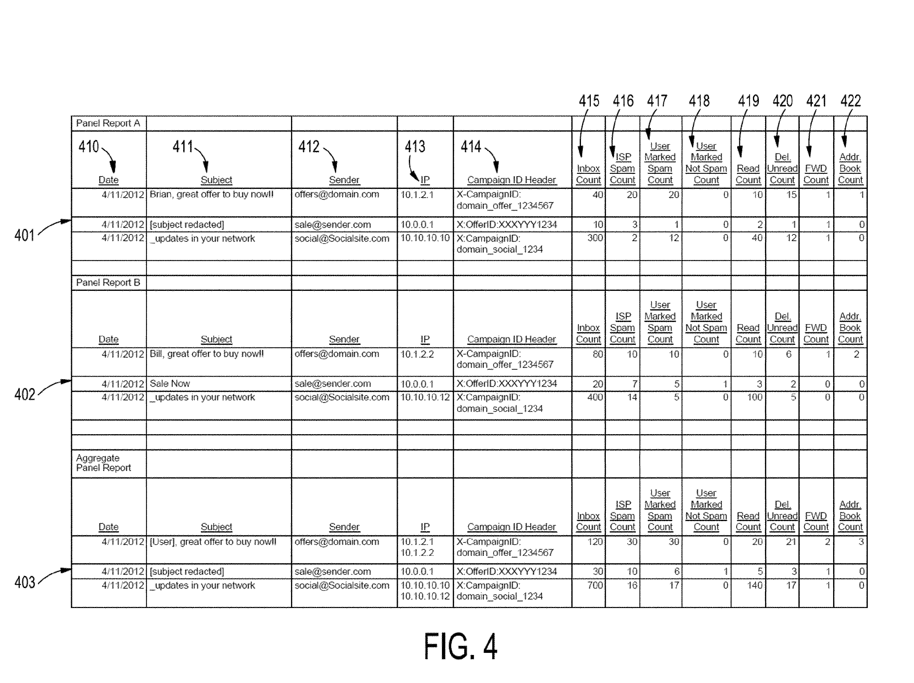

In other words, the invention facilitates the collection of email campaign statistics from multiple sources to create a single picture of a campaign. The statistics from each of the multiple sources need not include the exact same metrics or identifiers as each other. A non-limiting illustration of combined information from multiple sources is shown in FIG. 4. FIG. 4 shows a first row having data corresponding to a first report 401 from a first data collector 103, and a second row having data corresponding to a second report 402 from a second data collector 103. Each row has data fields 410-422 arranged in columns, which make up the campaign data. The fields include message receive date 410, subject line 411, sender name 412, IP addresses 413 from which the sender originated the campaign, and campaign ID header 414. Other campaign data fields include counts for interaction metrics: messages placed in inbox 415, messages marked as spam by ISP 416, messages marked as spam by recipient 417, messages marked as not spam by recipient 418, messages read 419, messages deleted without being read 420, messages forwarded 421, and addition of the sender's address to the recipient's address book 422.

Thus, for instance, the first and second reports 401, 402 each show campaign data from the same three campaigns. The second campaign listed in each of those reports 401, 402 has a receive date of "4/11/12," a subject line of "Sale Now," and was sent by a sender having a user/domain name of "sale@sender.com." It was assigned a campaign ID of "XXXYYY1234" by the sender. Email messages associated with the campaign were sent by sending servers 101 (step 201), received by recipients at client computers 102 (step 202), and data indicating recipients' interactions with the campaign was collected by multiple data collectors 103 (step 203), and reported by those data collectors 103 to the measurement center 100 (step 204). In the present example, each of two data collectors 103 has provided a separate report 401, 402 to the measurement center 100. As shown in FIG. 4, the first report 401 shows the subject line 411 of the second listed campaign as "[subject redacted]," illustrating that reports 401, 402 generated by each of the multiple data collectors 103 need not include all of the campaign data associated with a particular campaign. The measurement center 100 is capable of identifying which campaign specific data is associated with, based on the campaign data included in the multiple reports 401, 402 received by the measurement center 100. For example, the measurement center 100 may extract the campaign ID (e.g., "XXXYYY1234") from the campaign ID header 414 (e.g., "X:OfferID: XXXYYY1234") and determine that all campaign data associated with the same campaign ID is associated with the same campaign. Although the first and second reports 401, 402 in the present example each include data from the same three campaigns, presented in the same order and in the same format, each of the multiple data collectors 103 may report campaign data in any appropriate order and/or format. The multiple reports 401, 402 may include data from any number of campaigns, and each report 401, 402 need not include campaign data from the exact same campaigns.

FIG. 4 shows a third, aggregate report 403, produced by the measurement center 100 (step 205), that has aggregated the campaign data from the first and second reports 401, 402. As can be seen in FIG. 4, the measurement center 100 determines the data for the interaction metrics in the aggregate report 403 by adding the values from corresponding data fields 415-422 in the first and second reports 401, 402. For example, for the campaign with the Campaign ID of "XXXYYY1234," the first report 401 shows an inbox count 415 of ten, and the second report 402 shows an inbox count 415 of twenty. Accordingly, the aggregated third report shows an inbox count 415 of thirty. The values from the other data fields 416-422 can be aggregated in a similar way. The combined data shown in the aggregate report 403 may be analyzed by the measurement center 100 to determine the engagement score and benchmark for the associated campaign. Furthermore, the interaction metrics shown in the aggregate report 403 may be represented as percentages. In an exemplary embodiment of the invention, information included in the aggregate report 403 is used to determine the engagement score for the campaign, and may remain internal to the measurement center 100, without being presented to the campaign manager 108.

*4*. *Engagement Benchmark Algorithm*

The engagement benchmark algorithm, which can be applied in step 205 of FIG. 2, determines and analyzes how a sender's email messages (of an email campaign for advertising, etc.) are handled by recipients and/or ISPs. The engagement benchmark is an overall grading of email campaign performance based on an aggregation of multiple metrics that, when combined, provide a measure of recipient engagement with a campaign. The metrics used to calculate the engagement benchmark include but are not limited to: percentage of messages that get through to a recipient and are placed in the recipient's inbox; percentage of messages placed in spam folder by ISP; percentage of messages placed in spam folder by recipient (TIS); percentage of messages rescued from spam folder by recipient (TINS); percentage of messages read; percentage of messages deleted without being read; percentage of messages placed in a priority inbox (e.g., Gmail priority inbox); percentage of recipients with sender's address in recipient's personal address book; and percentage of messages forwarded.

The engagement benchmark is created using a statistical model to test similarity. Examples of statistical models that may be used in accordance with the invention include cosine similarity models, logistical regressions, neural network models, etc. However, the invention is not limited to a specific type of statistical model. Rather, any appropriate statistical model may be used. The model outputs an engagement score for a campaign based on the similarity between the deliverability and engagement metrics for the campaign, and a target set of deliverability and engagement metrics. Preferably, the target set represents a best-case combination of all engagement and deliverability metrics. The target set may be, for example, based on overall deliverability and engagement rates for all email campaigns analyzed by the measurement center 100. Preferably, the engagement score is based on a sample size of at least thirty panel recipients to ensure the statistical significance of the engagement benchmark. For all campaigns that are assigned an engagement score based on the model, an engagement ranking relative to the engagement score, as well as an engagement benchmark, are also determined and assigned to the campaign. The process allows for its ideals and targets to be constantly adjusted. That is, the engagement benchmark is not based on a static best/worst. Instead, the process for determining the engagement score and engagement ranking may detect new targets and ideals every time the process is run. For example, during a first execution of the engagement benchmark algorithm, the measurement center 100 may determine that a particular engagement score constitutes "excellent" engagement. During a subsequent execution of the engagement benchmark algorithm, the measurement center 100 may determine that that the same engagement score constitutes "average" engagement. The change in the engagement benchmark, which is based on the engagement ranking and hence the engagement score, may be attributable to an overall change in recipients' level of recipient engagement with other campaigns, as detected by the measurement center 100.

The system 10 may be configured such that the engagement benchmark is displayed to a campaign manager 108 or other end user, as shown in step 207 above. In an exemplary embodiment of the invention, the engagement benchmark is expressed as one of five designations: poor engagement, below average engagement; average engagement; above average engagement; and excellent engagement; while the underlying engagement ranking is an integer from 1 to 5, and the underlying engagement score is a numerical value between 0 and 1. However, the engagement rankings and engagement scores are not limited to the specific numerical ranges discussed above. For example, another exemplary embodiment of the invention may include more or less than five available engagement rankings and/or engagement benchmarks. In another exemplary embodiment of the invention, the engagement ranking may be a percentile value, and each available engagement benchmark may be associated with a particular range of percentile rankings.

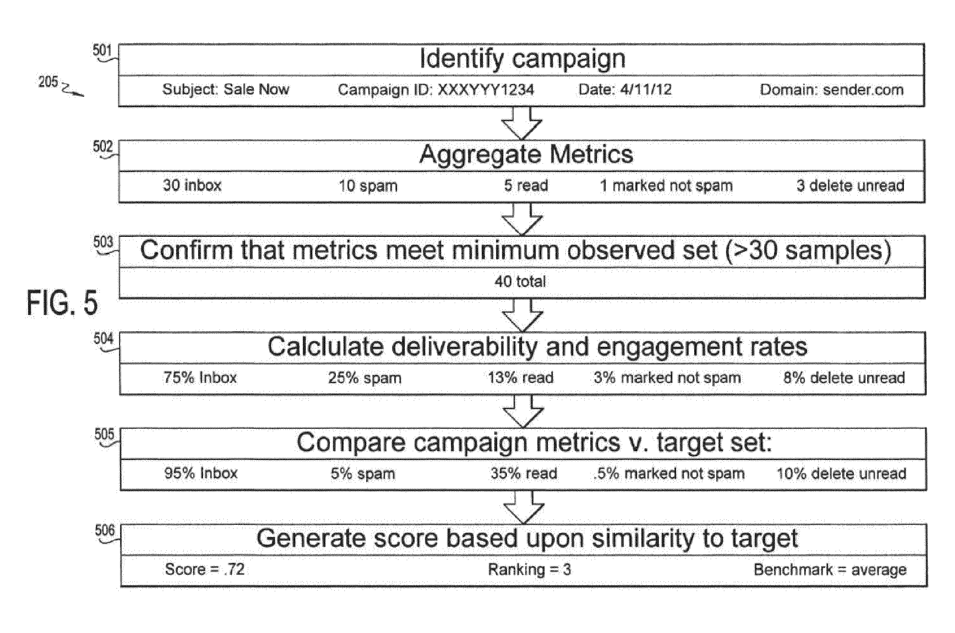

FIG. 5 provides an illustration of the steps performed within the measurement center 100 during an exemplary execution of the engagement benchmark algorithm, including exemplary campaign data and analytical results. The steps illustrated in FIG. 5 are substeps of step 205, which is illustrated in FIG. 2.

In step 501, an email campaign, for which an engagement benchmark is to be determined, is identified based on identifying campaign data included in the campaign reports received from the data collectors 103. The particular campaign to be analyzed has identifying campaign data including a subject line of "Sale Now," a campaign ID of "XXXYYY1234," a receive date of "4/11/12," and a sender domain name of "sender.com." It can therefore be seen that the particular campaign to be analyzed corresponds to the campaign, shown in FIG. 4, having the campaign ID of "XXXYYY1234."

In step 502, metrics associated with the identified campaign are aggregated to create a single picture of the campaign, which corresponds to the aggregate report 403 created by the measurement center 100 based on data received form the data collectors 103. In the present example, the data collectors 103 reported a total of thirty messages delivered to inboxes, ten messages delivered to spam folders, five messages read, one message marked as not spam, and three messages deleted without being read. Additional metrics not shown in FIG. 5, such as number of messages forwarded, may also be considered during execution of the engagement benchmark algorithm.

In step 503, it is confirmed that enough samples have been collected to ensure the statistical significance of the analysis. In the present example, forty samples have been collected, which exceeds the minimum requirement of thirty samples. If, at step 503, the minimum number of samples has not been collected, the algorithm may provide an indication that the identified campaign cannot be benchmarked.

In step 504, the deliverability and engagement rates for the campaign are calculated, and may be expressed as percentages. For example, the read rate (13%) is the number of messages read (i.e., five) divided by the total number of samples (i.e., forty).

In step 505, the calculated deliverability and engagement rates for the identified campaign are compared to a target set of rates.

In step 506, a statistical model is used to generate an engagement score (e.g., 0.72) based on the similarity between the deliverability and engagement rates for the identified campaign and those of the target set. An engagement ranking (e.g., 3) is generated based on the engagement score, and an engagement benchmark (e.g., average) is generated based on the engagement ranking.

*5*. *User Interface*

The exemplary user interface described below may be presented to a campaign manager 108 at step 207. The user interface includes visual depictions of campaign data, as well as information obtained based on the results of the engagement benchmark algorithm. The user interface may be accessible to a campaign manager 108 via a web interface.

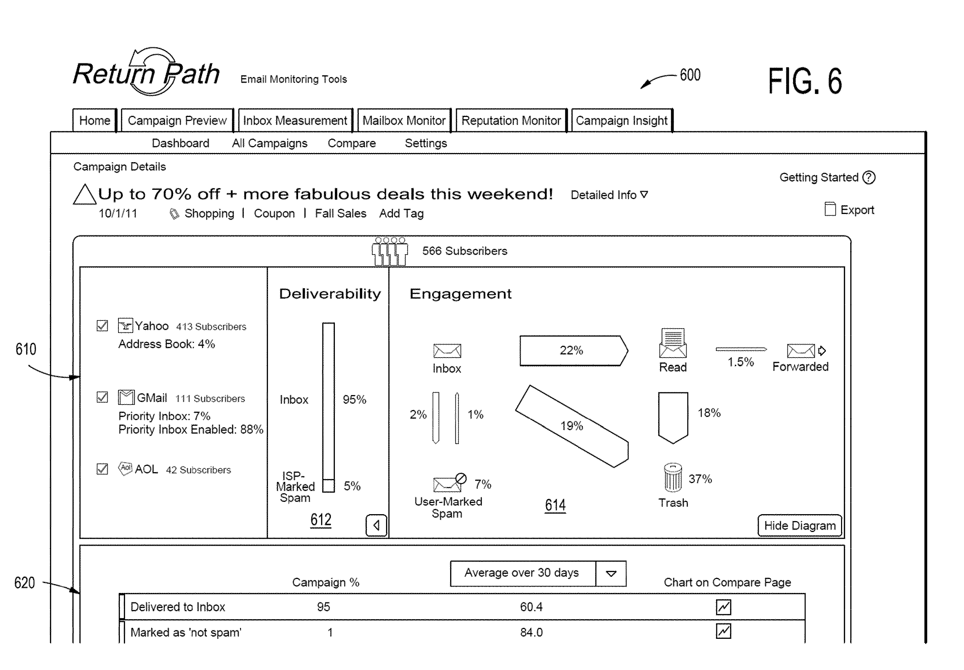

FIG. 6 shows a Campaign Details report 600, which may be included by a user interface in accordance with an exemplary embodiment of the invention. The Campaign Details report 600 provides information for a specific campaign, including the engagement benchmark for the campaign. Here, the engagement benchmark is represented by a graphic symbol 601 that allows the end user to quickly determine the how the performance of the campaign compares to that of other campaigns analyzed by the measurement center 100. In FIG. 6, the graphic symbol 601 representing the engagement benchmark is a triangle, which indicates a below average engagement benchmark. The Campaign Details report 600 may also include identifying campaign data such as the subject line 602 for the campaign, and the date 603 associated with the campaign, as well as categories 604 with which the campaign is associated.

The Campaign Details report 600 further includes a flow diagram 610, which provides a visual depiction of campaign data associated with a campaign, including message deliverability data 602 and recipient engagement data 604. The flow diagram 601 shows the results of an exemplary campaign, including how messages were handled by recipients for the campaign in which messages were sent to 566 subscribers (i.e., recipients). As shown, of those 566 subscribers, 413 had mailboxes hosted at Yahoo, and 4% of the Yahoo users' address books included the sender's address. Of the 566 subscribers, 111 had mailboxes hosted at Gmail, 88% of the Gmail users had Priority Inbox enabled, and 7% of the Gmail users had the campaign message placed in their priority inboxes. Of the 566 subscribers, 42 had mailboxes hosted at AOL.

The deliverability data 612 shows that 95% of campaign messages reached subscribers' inboxes, while 5% of messages were marked as spam by subscribers' ISPs. The engagement data 614 shows that a total of 7% of messages were placed in a spam folder, including the 5% of messages marked as spam by the ISPs, and 2% of messages that were manually moved from subscribers' inboxes to spam folders. The engagement data 614 shows that 1% of messages were rescued from spam folders to subscribers' inboxes. The engagement data 614 shows that 22% of messages were read, 19% of messages were deleted without being read, 18% of messages were deleted after being read, and 1.5% of messages were forwarded after being read.

Preferably, each of the arrows in the flow diagram is weighted in accordance with the percentage of subscribers represented by the arrow. For example, if 22% of subscribers read a given campaign message, then the arrow indicating the read rate may be about 22 times thicker that it would be had only 1% of subscribers read the message. Furthermore, the arrows may be color coded according to the relative performance of the associated interaction metric. For example, a red arrow may indicate poor performance, a green arrow may indicate good performance, and a grey arrow may indicate neutral performance. The values (e.g., percentages) associated with each arrow may be displayed within or next to the corresponding arrow. The arrows may point to icons that indicate how messages are handled by recipients. For example, an arrow pointing from an inbox icon to a read mail icon may indicate a percentage of recipients who read a message, while an arrow pointing from the inbox icon to a trash can icon may indicate a percentage of recipients who deleted the message without reading it. Thus, the invention provides a campaign manager 108, or other end user, with a quick visual understanding of overall campaign engagement. Such understanding allows a campaign manager 108 to immediately identify which aspects of a campaign may need attention, and which aspects are working well.

In addition to the flow diagram 610, the Campaign Details report 600 may also include a list view 620 that provides a campaign manager 108 with an organized list of the information provided in the flow diagram 610 in the form of a table. The list view 620 may have a column that includes the deliverability and engagement rates 622 discussed above. An "Average" column 624 may include a drop down menu that allows the campaign manager 108 to select a time period (e.g., the past 30 days), and to compare the deliverability and engagement data for the particular campaign to that of all of the campaign manager's campaigns, which have been sent during the selected time period. That feature provides the campaign manager with an easily accessible, but granular view of how the particular campaign performed relative to other campaigns during the selected time period. By selecting a Chart on Compare feature 626, a campaign manager 108 may view a graph of interaction metrics on a time series report to compare the particular campaign's performance for the specified metric to other campaigns initiated by the campaign manager 108, a category of mail, or a competitor over time.

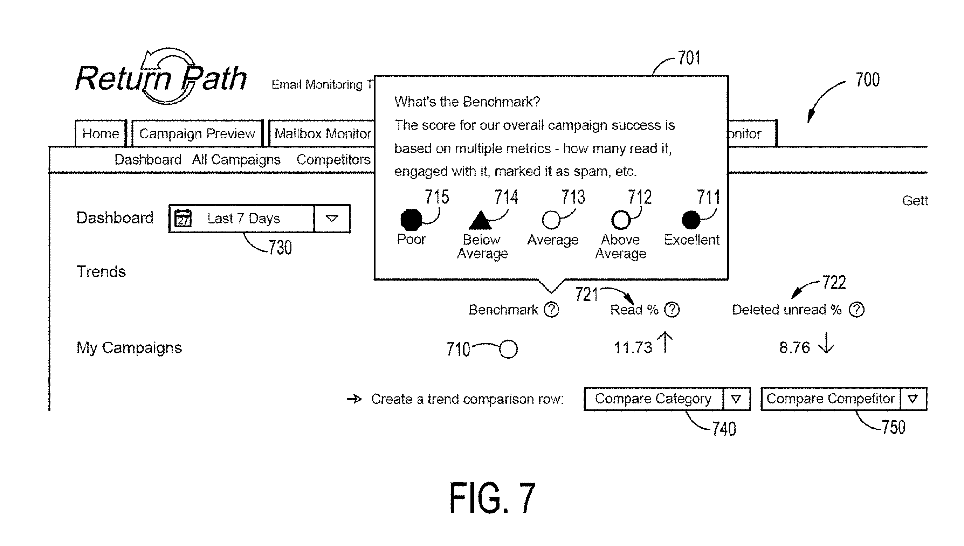

FIG. 7 shows a Trends report 700, which may be included by a user interface in accordance with an exemplary embodiment of the invention. Included in FIG. 7, is an information box 701, which explains the graphic symbols that may be used to represent various engagement benchmarks. Such an information box 701 may also be accessible elsewhere within the user interface. As shown, a completely filled circle 711 indicates excellent performance, or an engagement score within the top 10% of the histogram 300 shown in Fig. 3. Similarly, a heavy, unfilled circle 712 indicates above average performance, a light unfilled circle 713 indicates average performance, a triangle 714 represents below average performance, and an octagon 715 represents poor performance. The graphic symbol may also be color coded, with various colors corresponding to various levels of campaign performance.

The Trends report 700, may further include one or more controls, such as a drop down menu 730, or links that allow a campaign manager 108 to select a time period (e.g., last 7 days). The campaign manager 108 may then view an overall engagement benchmark based on an average of the performances of all of the campaign manager's campaigns, which originated during the selected time period. For example, the measurement center 100 may determine an overall engagement benchmark by calculating an average of all of the engagement rankings for the multiple individual campaigns to be included in the overall engagement benchmark. In FIG. 7, the light unfilled circle 710 indicates that the campaign manager's campaigns had an overall engagement benchmark of "average" over the past seven days.

The Trends report 700 may also include columns showing overall deliverability and engagement data for the campaign manager's campaigns. For example, the Trends report 700 may display the overall read rate 712, and the overall deleted unread rate 722 for all of the campaign manager's campaigns over the selected time period. The Trends report 700 may also provide indicators, such as arrows, to indicate whether the values of particular metrics have increased or decreased over the selected time period.

While it is advantageous for a campaign manager 108 to know, for example, the read rate 721 and the deleted unread rate 722 of the end user's particular campaigns (11.73% and 8.76%, respectively, in the example shown in FIG. 7), it is more advantageous for the campaign manager 108 to know whether the campaign exhibited excellent, above average, average, below average, or poor performance in comparison with other campaigns. That comparison is indicated by the overall engagement benchmark represented by the graphic symbol 710. It is also more advantageous for a campaign manager 108 to know how a particular metric is trending (i.e., improving or declining) over the selected time period, as indicated by the arrows in FIG. 7.

The Trends report 700 may also include one or more controls, such as buttons 740, 750 or links that allow a campaign manager 108 to view trends for campaigns associated with one or more specific categories, or to view trends for competitors' campaigns. For example, the campaign manager 108 may select to view an overall engagement benchmark for campaigns belonging to a specific category, or the campaign manager 108 may select to view an overall engagement benchmark for a competitor's campaigns.

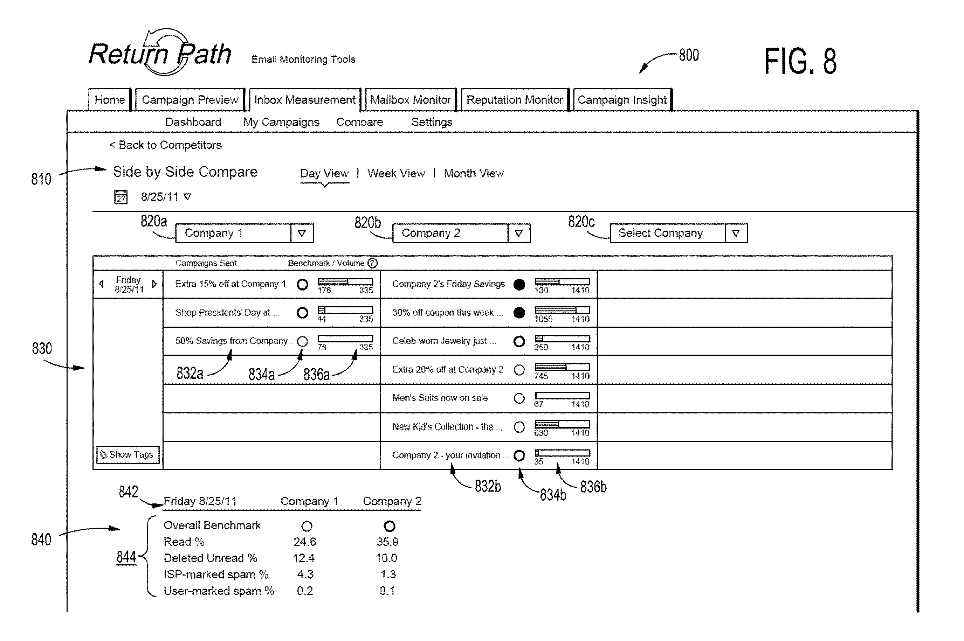

FIG. 8 shows a Side by Side Compare report 800, which may be included by a user interface in accordance with an exemplary embodiment of the invention. The Side by Side Compare report 800 provides a campaign manager 108 with an easily understandable view of how the performances of various campaigns compare with one another. The Side by Side Compare report 800 may include one or more controls, such as a drop down menu 810, or links that allow a campaign manager to select a time period, which may include a specific day, a specific week, or a specific month. The Side by Side Compare report 800 may further include controls, such as drop down menus 820a, 820b, 820c that allow a campaign manager 108 to select competitors for which campaigns are to be compared. The measurement center 100 may, for example, identify the company associated with a particular campaign based on campaign data such as sender user name, sender domain name, originating IP address, etc.

Once a campaign manager 108 has selected a company by using a drop down menu 820a, 820b, 820c, for example, the campaign information for the selected company may appear below the company name on the Side by Side Compare report 800. Thus, the Side by Side Compare report 800 provides an organized comparison list 830, which may include columns indicating the subject lines 832a, 832b, engagement benchmarks 834a, 834b, and volumes 836a, 836b (which may include the sample size, as well as the total number of emails sent in connection with the campaign) for each individual campaign sent by each of the selected competitors during the selected time period.

Here, campaign information for two companies (i.e., "Company 1" and "Company 2") is shown, and a campaign manager 108 can easily compare the subject lines 832a, engagement benchmarks 834a, and volumes 836a associated with the campaigns of Company 1 with the subject lines 832b, engagement benchmarks 834b, and volumes 836b associated with the campaigns of Company 2. Clicking on an individual campaign in the Side by Side Compare report 800 may allow a campaign manager to drill down to view specific details for that campaign as shown in the Campaign Details report 600.

The Side by Side Compare report 800 may also provide an overall comparison summary 840, which includes overall engagement benchmarks 842 and overall deliverability and engagement rates 844 for all of the campaigns sent by each selected competitor over the selected time period. The overall engagement benchmarks 842 for the campaigns shown on the Side by Side Compare report 800 are determined in the same manner as the overall engagement benchmark (represented by the graphic symbol 710) shown on the Trends report 700.

In addition to the Campaign Details report 600, the Trends report 700, and the Side by Side Compare report 800 discussed above, the user interface may include other pages, tables, graphs, charts, lists, reports, etc., which provide a campaign manager 108 with information related to the performance of one or more email campaigns.

An email campaign is not restricted to the field of marketing. Any email sent to a large number of recipients is considered as email campaign. Another example for an email campaign could be the process of sending an email invitation to a large number of recipients.

The foregoing description and drawings should be considered as illustrative only of the principles of the invention. The invention may be configured in a variety of manners and is not intended to be limited by the preferred embodiment. Numerous applications of the invention will readily occur to those skilled in the art. Therefore, it is not desired to limit the invention to the specific examples disclosed or the exact construction and operation shown and described. Rather, all suitable modifications and equivalents may be resorted to, falling within the scope of the invention.

## Claims

1. A method for evaluating the effectiveness of an email campaign, the method comprising the steps of:
receiving a plurality of campaign reports, each campaign report including campaign data associated with the email campaign;
combining the campaign data from the plurality reports to produce a single report corresponding to the email campaign;
calculating a campaign score for the email campaign based on the combined campaign data; and
determining a campaign ranking for the email campaign based on the campaign score.

2. The method of claim 1, wherein the step of combining the data includes formatting campaign data received from multiple sources.

3. The method of claim 1 or 2 further comprising the step of determining a campaign benchmark for the email campaign based on the campaign ranking, wherein the campaign benchmark indicates an effectiveness of the email campaign as compared to that of other email campaigns.

4. The method of claim 3 further comprising the step of providing a report to an end user, wherein the report provided to the end user includes the campaign data or the campaign benchmark.

5. The method of one of claims 1 to 4, wherein the plurality of campaign reports include campaign data associated with a second email campaign, the method further comprising the steps of:
calculating a second campaign score for the second email campaign based on the campaign data;
determining a second campaign ranking for the second email campaign based on the second campaign score; and
generating a report comparing the email campaign and the second email campaign.

6. A system for evaluating the effectiveness of an email campaign, the system comprising:
a secure server configured to receive campaign data;
an analytics cluster configured to receive a plurality of campaign reports, each campaign report including campaign data associated with the email campaign, combine the campaign data from the plurality of reports to produce a single report corresponding to the email campaign, calculate a campaign score for the email campaign based on the combined campaign data, and determine a campaign ranking for the email campaign based on the campaign score;
a database server configured to store campaign data; and
a web server configured to present campaign data to an end user.

7. The system of claim 6 further comprising at least one data collector configured to collect campaign data and send the campaign data to the secure server.

8. The system of claim 6 or 7, wherein the campaign data includes interaction metrics and at least one of: message receive date, message receive time, subject, sender domain name, sender user name, originating IP address, and campaign ID.

9. The system of one of claims 6 to 8, wherein the campaign data includes interaction metrics and the interaction metrics include at least one of: amount of messages placed in inbox, amount of messages placed in spam folder by ISP, amount of messages placed in spam folder by recipient, amount of messages rescued from spam folder by recipient, amount of messages placed in a priority inbox, amount of messages for which sender is added to a personal address book, amount of messages read, amount of messages deleted without being read, amount of messages forwarded, amount of messages replied to, and amount of messages for which recipient does not interact with the message at all.

10. The system of one of claims 6 to 9, wherein the analytics cluster is configured to format campaign data received from multiple sources.

11. The system of one of claims 6 to 10, wherein the analytics cluster is configured to calculate the campaign score using a statistical model for testing similarity.

12. The system of one of claims 6 to 11, wherein the campaign score indicates recipients' level of engagement with the email campaign.

13. The system of one of claims 6 to 12, wherein the campaign ranking indicates an effectiveness of the email campaign as compared to that of other email campaigns.

14. The system of one of claims 6 to 13, wherein the analytics cluster is configured to determine a campaign benchmark for the email campaign based on the campaign ranking, and wherein the campaign benchmark indicates an effectiveness of the email campaign as compared to that of other email campaigns.

15. The system of one of claims 6 to 14, wherein the system is configured to provide a report to an end user, wherein the report provided to the end user includes the campaign data or the campaign benchmark.
